# EUROPEAN PATENT SPECIFICATION

(11) **EP 3 372 914 B1**
(45) Date of publication and mention of the grant of the patent: **04.05.2022**
(21) Application number: 18152226.9
(22) Date of filing: 18.01.2018
(51) Int. Cl.: G01F 1/34, F24F 13/12, G01F 1/05, F24F 11/30, F24F 7/00, F24F 11/74, F24F 11/89, F24F 13/10, F24F 13/06

(54) **METHOD FOR MEASURING AIR FLOW FROM A VENTILATION VALVE**
VERFAHREN ZUR MESSUNG DES LUFTSTROMS AUS EINEM ENTLÜFTUNGSVENTIL
PROCÉDÉ POUR MESURER L'ÉCOULEMENT D'AIR DEPUIS UNE SOUPAPE DE VENTILATION

(30) Priority: 17.02.2017 FI 20175150
(43) Date of publication of application: 12.09.2018
(73) Proprietor: FläktGroup Sweden AB, 551 84 Jönköping (SE)
(72) Inventor: JÄRVINEN, Juha, FI-37800 AKAA (FI); FRANSSI, Matti, FI-37910 AKAA (FI)
(74) Representative: Kolster Oy Ab

(56) References cited:
- EP-A1- 1 029 558
- CH-A5- 575 104
- JP-A- H06 257 840
- US-A- 3 299 797
- US-A- 4 754 651
- US-A1- 2012 046 792
- US-B1- 6 500 061
- US-B1- 9 188 508

## Description

The object of the present invention is a method for measuring air flow from a ventilation valve fastened into a wall or ceiling of an indoor space, the ventilation valve having a body and a front plate connected to the body, in which body is a truss provided with a hole, and into which front plate a pin is fastened perpendicularly with respect to the front plate, and a hollow spindle being fastened into the truss at the point of the hole, into which spindle the pin of the front plate is pushed.

The ventilation valve can be a supply air valve or an exhaust air valve, which is fastened into a wall or ceiling of a room. As implied by their designations, supply air is taken via a supply air valve and, correspondingly, air is exhausted from the room via an exhaust air valve. In this context, a room refers to any indoor space whatsoever in which ventilation is arranged. Typically, supply air is taken from outside and exhaust air is removed to outside.

This invention refers to valves that comprise a valve body, which is fastened into a hole in a ceiling or wall, and a front plate. In the body of the valve is a truss, in the center of which a hole provided with an internal thread has conventionally been made, into which hole a pin fastened to the front plate and provided with an external thread is screwed. When the correct position of the front plate is achieved, the joint can be locked with nuts. A tool is needed for screwing the nut, not only in an installation situation but also in an adjusting situation.

In the type of valve described above, flow measurement is performed by pushing a probe to a freely selectable point behind the body of the valve, in which case it can remain in a bad position that substantially affects the measurement result. Patent document US-A-2012/046792 discloses an exemplary method for measuring air flow in a ventilation duct with a Pitot tube connected to a measuring instrument by means of a rubber hose.

The aim of the invention is to provide a more reliable and easier method for measuring air flow from a ventilation valve. The method according to the invention is characterized in that an air flow measuring hose is fastened to the end, on the side of the indoor space, of the hollow spindle fastened to the truss of the body of the ventilation valve, and the air flow is measured via the hose.

One preferred embodiment of the method according to the invention is characterized in that the end of the hollow spindle on the indoor space side is beveled for facilitating the fastening of a measuring hose.

One advantage of the invention that can be mentioned is that the location for measuring air flow can be standardized, i.e. the measuring is always performed at the same location. The measurement is performed directly from the end of the spindle with the measuring hose, i.e. a separate measuring probe is not needed, but instead a measuring hose on a pressure gauge can be fastened directly to the spindle. When the spindle is welded to the body (to the truss), the structure becomes more rigid and the whole valve becomes more robust.

In addition, the invention enables free positioning of the front plate, which is particularly advantageous in the case of an angular front plate.

In the following, the invention will be described in more detail by the aid of some preferred embodiments with reference to the attached drawings, wherein
Fig. 1 presents the body of a ventilation valve according to the invention.
Fig. 2 presents a cross-section of the structure of a supply air valve.
Fig. 3 presents a cross-section of the structure of an exhaust air valve.
Fig. 4 presents the body of a ventilation valve according to the invention and a measuring hose of a pressure gauge connected to the spindle of the body.

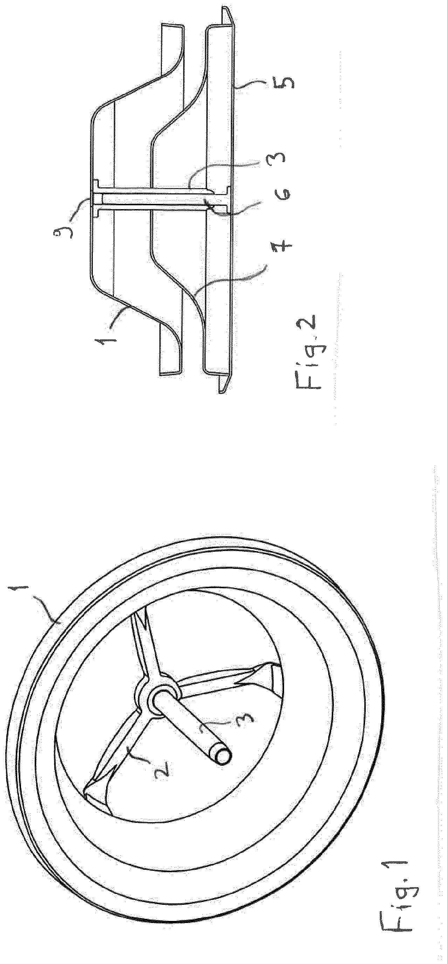

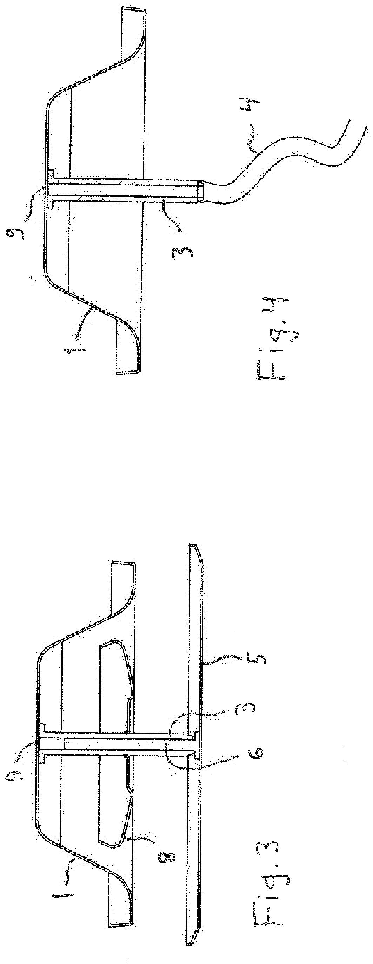

Fig. 1 presents the round body 1 of a ventilation valve. The ventilation valve can be a supply air valve (Fig. 2) or an exhaust air valve (Fig. 3). In both cases the body 1 is similar. A truss 2 is formed in it or fastened to it, the truss in this case having three branches. A hollow spindle 3 is fastened, most preferably welded, to the truss 2 in the direction of the center axis with regard to the round body 1. There is also a hole 9 in the truss at the point of the hollow spindle 3 in such a way that the flow passes through the hole 9 and the hollow spindle 3. This enables measurement of the air flow according to Fig. 4. In measuring the air flow the pressure difference is measured, and this can be done by fastening a measuring hose 4 onto the end of the hollow spindle 3. The end of the spindle 3 can be made to be beveled for facilitating the fastening.

The hollow spindle is used for fastening the front plate, as is presented in Figs. 2 and 3. The pin 6 on the front plate is pushed inside the hollow spindle 3. A small curve, which cannot be detected in the attached drawings, is made in the pin. As a result of this curve, the pin 6 functions in a slightly spring-like manner, in which case it remains inside the hollow spindle 3 by means of friction. The curve can, of course, be in the hollow spindle 3 instead of the pin, or in both.

Fig. 2 thus presents a supply air valve, wherein the adjustment part 7 remains against the front plate 5 when the front plate 5 is installed into position.

Fig. 3 presents an exhaust air valve, in which the pin of the front plate is pushed to the base until the edge of the spindle 3 comes against the flange of the pin 6. The adjustment part is marked with the reference number 8.

It is obvious to the person skilled in the art that the invention is not limited to the embodiments described above, but that it can be varied within the scope of the claims presented below. Instead of a curve, some other arrangement that increases friction can be made in the pin 6 of the front plate or in the hollow spindle 3 or in both. The pin 6 or the hollow spindle 3 can be installed, for example, to slant, in which case friction is created between them, the friction keeping the pin 6 in the spindle 3. Friction-enhancing material or protrusions, *et cetera,* can be on the surface of either one or of both.

## Claims

1. Method for measuring air flow from a ventilation valve fastened into a wall or ceiling of an indoor space, the ventilation valve having a body (1) and a front plate (5) connected to the body, in which body (1) is a truss (2) provided with a hole (9), and into which front plate (5) a pin (6) is fastened perpendicularly with respect to the front plate, and a hollow spindle (3) being fastened into the truss (2) at the point of the hole (9), wherein the pin (6) of the front plate is configured to be pushed into the spindle (6), and wherein an air flow measuring hose (4) is fastened to the end, on the side of the indoor space, of the hollow spindle (3) fastened to the truss (2) of the body (1) of the ventilation valve, and the air flow is measured via the hose by measuring the pressure difference.

2. Method according to claim 1, wherein the end of the hollow spindle (3) on the indoor space side is beveled for facilitating the fastening of a measuring hose.

## Patentansprüche

1. Verfahren zum Messen eines Luftstroms von einem Entlüftungsventil, das in einer Wand oder Decke eines Innenraums befestigt ist, wobei das Entlüftungsventil einen Körper (1) und eine Frontplatte (5), die mit dem Körper verbunden ist, aufweist, wobei im Körper (1) ein Träger (2) mit einem Loch (9) bereitgestellt ist und wobei in der Frontplatte (5) ein Stift (6) mit Bezug auf die Frontplatte senkrecht befestigt ist und wobei eine hohle Spindel (3) am Punkt des Lochs (9) im Träger (2) befestigt ist, wobei der Stift (6) der Frontplatte dazu ausgelegt ist, in die Spindel (6) gedrückt zu werden, und wobei ein Luftstrommessschlauch (4) auf der Seite des Innenraums am Ende der hohlen Spindel (3) befestigt ist, die am Träger (2) des Körpers (1) des Entlüftungsventils befestigt ist, und der Luftstrom durch Messen der Druckdifferenz via den Schlauch gemessen wird.

2. Verfahren nach Anspruch 1, wobei das Ende der hohlen Spindel (3) auf der Innenraumseite zum Erleichtern des Befestigens eines Messschlauchs abgeschrägt ist.

## Revendications

1. Procédé pour mesurer l'écoulement d'air d'une valve de ventilation fixée dans un mur ou un plafond d'un espace intérieur, la valve de ventilation ayant un corps (1) et une plaque avant (5) raccordée au corps, dans lequel corps (1), on trouve une armature (2) dotée d'un trou (9) et dans laquelle plaque avant (5), une goupille (6) est fixée perpendiculairement par rapport à la plaque avant, et une broche creuse (3) étant fixée dans l'armature (2) au niveau de la pointe du trou (9), dans lequel la goupille (6) de la plaque avant est configurée pour être poussée dans la broche (6), et dans lequel un tuyau flexible de mesure d'écoulement d'air (4) est fixé à l'extrémité, du côté de l'espace intérieur, de la broche creuse (3) fixée sur l'armature (2) du corps (1) de la valve de ventilation, et l'écoulement d'air est mesuré via le tuyau flexible en mesurant la différence de pression.

2. Procédé selon la revendication 1, dans lequel l'extrémité de la broche creuse (3) du côté de l'espace intérieur est biseautée pour faciliter la fixation d'un tuyau flexible de mesure.
